## Europäisches Patentamt
## European Patent Office
## Office européen des brevets

(19)

(11) Numéro de publication: **0 223 704**
**B1**

(12)
# FASCICULE DE BREVET EUROPEEN

(45) Date de publication du fascicule du brevet:
**13.06.90**

(21) Numéro de dépôt: **86402517.6**

(22) Date de dépôt: **12.11.86**

(51) Int. Cl.⁵: **F16D 65/16, F16D 55/224,**
**F16D 65/34, F16D 65/56,**
**F16D 55/24, B60T 13/74**

(54) **Dispositif de freinage électrique pour véhicule.**

(30) Priorité: **20.11.85 FR 8517180**

(43) Date de publication de la demande:
**27.05.87 Bulletin 87/22**

(45) Mention de la délivrance du brevet:
**13.06.90 Bulletin 90/24**

(84) Etats contractants désignés:
**DE ES GB IT SE**

(56) Documents cités:
**EP-A- 0 013 502**
**EP-A- 0 023 468**
**EP-A- 0 109 918**
**EP-A- 0 117 192**
**FR-A- 1 589 010**
**FR-A- 2 557 241**
**FR-A- 2 557 528**
**GB-A- 2 053 394**
**GB-A- 2 156 021**
**US-A- 3 966 028**
**US-A- 4 064 973**
**US-A- 4 194 596**

(73) Titulaire: **BENDIX France Société Anonyme dite:,**
**126, rue de Stalingrad, F-93700 Drancy(FR)**

(72) Inventeur: **Carre, Jean-Jacques, 59, Boulevard de l'Est,**
**F-93340 Le Raincy(FR)**
Inventeur: **Thioux, Alain, 9 Allée des Bordes,**
**F-94430 Chennevieres(FR)**

(74) Mandataire: **Lejet, Christian et al, BENDIX FRANCE**
**Division Technique Service Brevets Bendix**
**Europe 126 rue de Stalingrad, F-93700 Drancy(FR)**

ACTORUM AG

## Description

La présente invention concerne les dispositifs de freinage électrique pour véhicules, du type comprenant un mécanisme d'actionnement pour déplacer dans une direction au moins un organe de friction et l'amener en engagement de friction avec au moins un organe rotatif à freiner, le mécanisme d'actionnement comprenant un moteur électrique entraînant en rotation un arbre de commande comportant une partie filetée coopérant en engagement d'entraînement réversible avec un organe d'actionnement déplaçable linéairement pour actionner l'organe de friction.

Un dispositif de freinage électrique de ce type est décrit dans le document FR-A-2 557 528. Dans le dispositif de ce document, l'organe d'actionnement, actionné par l'arbre de commande, est constitué sous la forme d'une vis attaquant un levier de pression articulé sur une pièce support et couplé l'organe de friction, suivant un agencement de construction et de mise en oeuvre délicates, imposant une structure particulière à l'ensemble du dispositif de freinage, et présentant un rendement peu élevé nécessitant une puissance électrique considérable.

Un autre dispositif de freinage électrique, présentant les caractéristiques contenues dans la premier part de la revendication 1 est décrit dans le document GB-A 2 156 021.

La présente invention a pour objet de proposer un dispositif de freinage pour véhicules du type considéré, de conception simple et robuste, de faibles coûts de fabrication, n'imposant à l'ensemble du dispositif de freinage que de faibles modifications générales, présentant un rendement amélioré, requérant en conséquence une puissance électrique réduite et convenant à un grand nombre d'utilisations différentes pour une large gamme de véhicules.

Pour ce faire, selon une caractéristique de l'invention, l'arbre de commande s'étend sensiblement orthogonalement à la dite direction de déplacement de l'organe de friction, l'organe d'actionnement comprenant une structure de coin associée à au moins une paire de galets coopérant respectivement avec une paire de surfaces de rampes en vis-à-vis dont au moins une première surface de rampe est formée sur un moyen de piston déplaçable dans la dite direction pour actionner l'organe de friction et le dispositif de freinage comprenant au moins un moyen de butée axiale à bille entre l'arbre de commande et une paroi stationnaire adjacente.

L'agencement selon l'invention permet, d'une part, d'aménager aisément le mécanisme d'actionnement dans une structure générale de frein de conception classique tel que décrit dans le document US-A 4 064 973 et, d'autre part, d'obtenir, dans un volume global réduit, un rendement amélioré permettant son utilisation dans une large gammme de véhicules.

Dans cet esprit, selon une autre caractéristique de l'invention, l'organe rotatif à freiner est constitué d'au moins un disque, avantageusement deux, le dispositif de freinage comportant une structure d'étrier chevauchant le disque et supportant le mécanisme d'actionnement, le moyen de piston coulissant dans un alésage formé dans la structure d'étrier, laquelle peut ainsi être dérivée directement d'une structure d'étrier de dispositif de freinage classique à fonctionnement hydraulique ou hydraulique-mécanique.

D'autres caractéristiques et avantages de la présente invention ressortiront de la description suivante d'un mode de réalisation, donné à titre illustratif mais nullement limitatif, faite en relation avec les dessins annexés, sur lesquels :

la figure 1, est une vue en coupe schématique d'un dispositif de freinage électrique selon l'invention ; et
La fig. 2 est une vue similaire d'un autre mode de réalisation de l'invention.

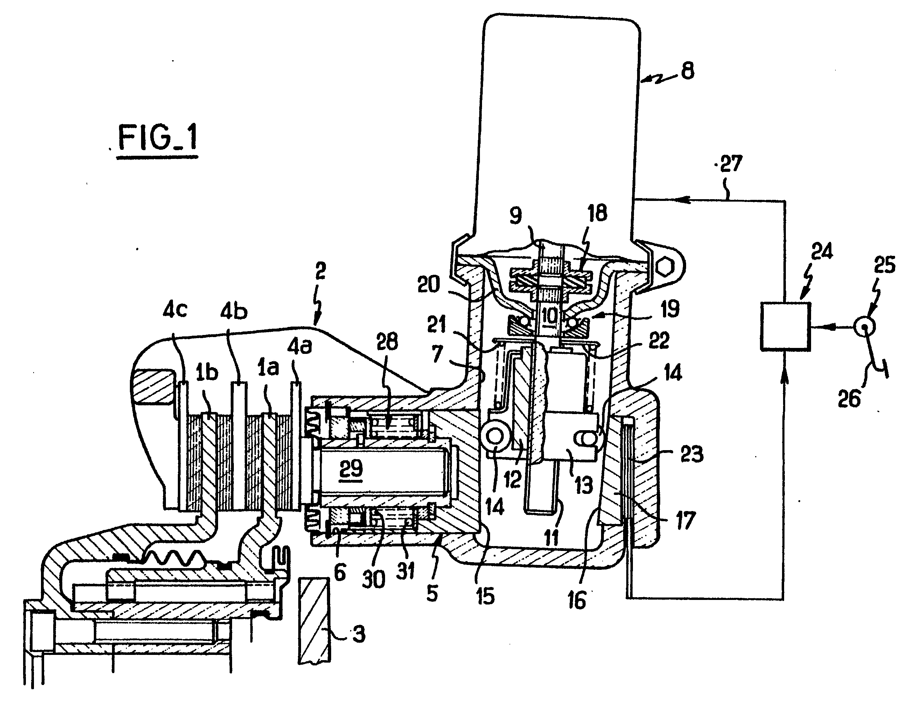

Dans le mode de réalisation représenté sur la figure 1, on reconnaît un dispositif de freinage à disques du type général décrit dans le document EP-A-0117 192, dont le contenu est supposé intégré ici pour référence et comprenant une paire de disques parallèles 1a, 1b, couplés à une roue de véhicule (non représentée) et chevauchés par une structure d'étrier, désignée généralement par la référence 2, montée avec possibilité de coulissement sur un support fixe repéré par la référence 3. Dans la structure d'étrier 2 sont montés à guidage et à coulissement des organes de friction 4A, 4B, 4C déplaçables dans une direction parallèle à l'axe de rotation des disques 1a, et 1b directement, et indirectement par réaction au travers de la structure d'étrier 2, par un moyen de piston, désigné généralement par la référence 5 coulissant dans un alésage 6 formé dans la structure d'étrier et d'axe parallèle à l'axe de rotation des disques 1a, 1b. L'alésage 6 débouche dans un puits 7 formé transversalement dans la structure d'étrier 2 et sur l'extrémité extérieure duquel est rapporté un moteur électrique 8. L'arbre de sortie 9 du moteur électrique 8 est couplé en rotation à un arbre de commande 10 s'étendant dans le puits 7 dans une direction sensiblement orthogonale à l'axe de l'alésage 6 (en fait, suivant un angle d'environ 85° par rapport à cet axe). L'arbre de commande comporte une partie d'extrémité principale filetée 11 sur laquelle est engagée en engrènement réversible une structure de coin 12 taraudée intérieurement à laquelle est associée une cage 13 portant au moins une paire de galets à axes parallèles 14 coopérant respectivement en engagement d'appui et de roulement, avec une paire de surfaces de rampes en vis-à-vis 15 et 16 convergeant dans la direction de convergence des surfaces de coin externes de la structure de coin 12. Une première (15) de ces surfaces de rampes est formée par la face intérieure de la structure de piston 5 débouchant dans le puits 7, la seconde (16) de ces surfaces de rampes étant formée par un bloc 17 monté dans la zone du puits 7 opposée à l'alésage 6.

Pour permettre un léger débattement angulaire de l'arbre de commande 10 par rapport à l'arbre de sortie 9 du moteur électrique 8 pour accompagner le déplacement du moyen de piston 5, l'extrémité non filetée de l'arbre de commande 10 est couplée à l'arbre de sortie 9 par un accouplement élastique 18 du type à anneau élastique solidarisé à deux flasques métalliques couplés respectivement aux arbres 9 et 10. Sur la portion non filetée de l'arbre de commande 10 est montée une cage sphérique d'une butée à billes, désignée généralement par la référence 19, dont la cage stationnaire, présentant également une portion centrale sphérique, est constituée par une cloison 20, traversée par l'arbre de commande 10 et bridée entre la bride de montage du moteur électrique 8 et un flasque d'extrémité de la portion de la structure d'étrier 2 définissant le puits 7. Un ressort de compression 21, prenant appui sur une collerette 22 supportée sur l'arbre de commande 10 sollicite la cage 13 portant les galets 14 dans la direction tendant à maintenir ces derniers en contact contre les surfaces de rampes 15 et 16, et contre les faces d'écartement associées de la structure de coin 12.

On comprendra qu'une rotation dans un sens de l'arbre de commande 10 provoque un déplacement du coin 12, et des galets 14 associés, dans une direction provoquant un écartement relatif des surfaces de rampes 15 et 16 et, donc un déplacement de la structure de piston 5 dans la direction amenant en engagement de friction les organes de friction 4 avec les disques 1 , tandis qu' une rotation dans l'autre sens de l'arbre de commande 10 ramènera l'ensemble de la structure de coin 12 et des galets 14 vers la configuration de repos représentée sur la figure.

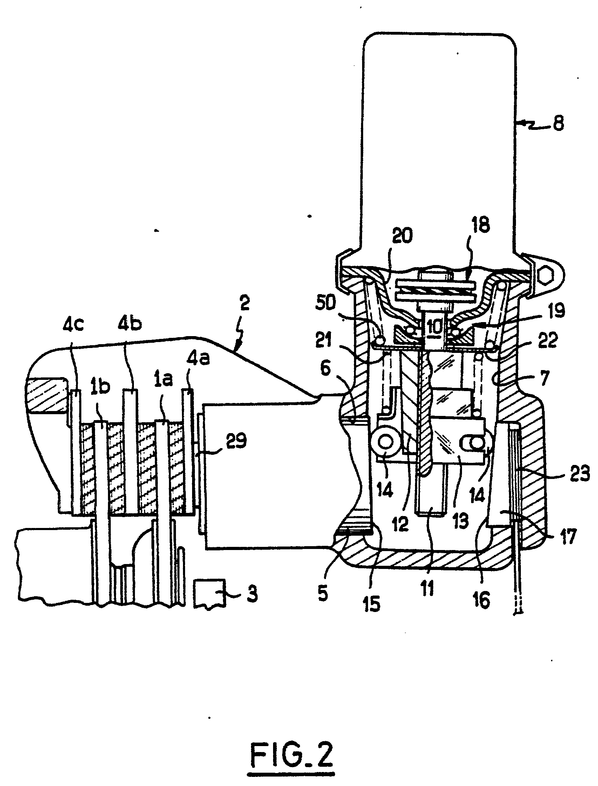

Selon un aspect avantageux de l'invention, comme on le voit sur la Figure 2, un ressort d'assistance 50, de force (par exemple 40 daN) supérieure à celle du ressort 21, est disposé entre la cloison 20 et la collerette 22, plaquant celle-ci contre l'extrémité adjacente de la structure de coin 12 et sollicitant donc normalement cette dernière dans la direction d'actionnement en freinage. Ainsi, lors du commencement d'une phase de freinage, le ressort d'assistance 50,comprimé en position de repos, fournit une bonne part de l'effort de freinage, la pleine puissance du moteur 8 n'étant requise que pour l'obtention d'un effort de freinage maximum (jusqu'à 60 daN). Par contre, à chaque phase de défreinage, lorsque le moteur n'a plus à exercer l'effort de freinage, le retour de la structure de coin 12 vers sa position de repos est mis à profit pour récomprimer le ressort d'assistance 50 qui sera ainsi de nouveau pleinement opérationnel pour la phase de freinage subséquente.

Selon un autre aspect de l'invention, entre le bloc stationnaire 17 et son support dans la structure d'étrier 2 est disposé un capteur de force ou de pression 23, par exemple du type piézo-électrique ou à jauge de contraintes, pour détecter, par réaction, la force exercée par la structure de piston 5 sur les organes de friction 4 et, partant, l'effort de freinage exercé par la structure de coin 12, permettant ainsi un pilotage précis du moteur 9 dans les deux sens d'actionnement. Les signaux électriques provenant du capteur de force 23 sont transmis à une unité de commande électronique 24 recevant également des signaux en provenance d'un capteur de position ou de force 25 associé à la pédale de freins 26 du véhicule et élaborant le signal de commande, transmis par une ligne 27, du moteur électrique 8 pour la mise en oeuvre du frein.

Selon une autre caractéristique de l'invention, le moyen de piston 5 incorpore un système de rattrapage de jeux, désigné généralement par la référence 28, tel que décrit par exemple en relation avec la figure 5 du document EP-A-0145535, dont le contenu est supposé intégré ici pour référence et incorporant une vis centrale 29 actionnant directement l'organe de friction adjacent 4a et réglable axialement par rapport à la structure principale du moyen de piston 5 qui forme la surface de rampe arrière 15 et qui est rappelée dans la direction d'engagement avec le galet adjacent 14 par une paire de ressort 30 et 31, coaxiaux l'axe de l'alésage 6, du système de rattrapage de jeux 28.

Selon le type de véhicule, un dispositif de freinage selon l'invention, avec un disque unique, met en oeuvre typiquement un moteur électrique 8 d'une puissance de 115 watts à 5500 tours/minute avec un couple impulsionnel de 1 mN.

Dans les modes de réalisation avec une paire de disques parallèles 1a, 1b et un ressort d'assistance 50 , le moteur électrique 8 peut avoir une puissance notablement réduite. La présente invention est également applicable à des freins à tambour, les surfaces de rampes 15 et 16 étant alors formées par les extrémités en regard de deux moyens de pistons coaxiaux et opposés, le capteur de force ou de pression 23 étant intégré dans un de ces pistons.

## Revendications

1. Dispositif de freinage électrique pour véhicule, comprenant un mécanisme d'actionnement pour déplacer dans une direction au moins un organe de friction (4a) et l'amener en engagement de friction avec au moins un organe rotatif à freiner (1a), le mécanisme d'actionnement comprenant un moteur électrique (8) entraînant en rotation reversible un arbre de commande (10) comportant une partie filetée (11) coopérant en engagement d'entraînement avec un organe d'actionnement (12) déplaçable linéairement pour actionner l'organe de friction, caractérisé en ce que l'arbre de commande (10) s'étend sensiblement orthogonalement à la dite direction de déplacement de l'organe de friction et en ce que l'organe d'actionnement comprend une structure de coin (12) associée à au moins une paire de galets (14) coopérant respectivement avec une paire de surfaces de rampes en vis-à-vis (15, 16), au moins une première (15) de ces surfaces de rampes étant formée sur un moyen de piston (5) déplaçable dans la dite direction pour actionner l'organe de friction (4a), et en ce qu'il comprend au moins un moyen de butée axiale à bille (19) entre l'arbre de commande (10) et une paroi stationnaire adjacente (20) pour absorber les efforts axiaux sur l'arbre de commande (10) et permettre un léger débattement angulaire de l'arbre de commande (10) pour accompagner le déplacement du moyen de piston (5).

2. Dispositif selon la revendication 1, caractérisé en ce qu'il comprend un ressort d'assistance (50) sollicitant la structure de coin (12) dans la direction d'actionnement du moyen de piston (5).

3. Dispositif selon l'une des revendications 1 ou 2, caractérisé en ce que l'arbre de commande (10) est relié à l'arbre de sortie (9) du moteur électrique (8) par un accouplement élastique (18).

4. Dispositif selon l'une des revendications 1 à 3, caractérisé en ce qu'il comprend au moins un dispositif capteur de force (23) associé à au moins une (16) des surfaces de rampes.

5. Dispositif selon l'une des revendications précédentes, caractérisé en ce que l'organe rotatif comprend au moins un disque (1a), le dispositif comportant une structure d'étrier (2) chevauchant le disque et supportant le mécanisme d'actionnement, le moyen de piston (5) coulissant dans un alésage (6) formé dans la structure d'étrier (2).

6. Dispositif selon la revendication 5, caractérisé en ce que la seconde surface de rampe (16) est montée stationnaire dans la structure d'étrier (2).

7. Dispositif selon la revendication 4 et la revendication 6, caractérisé en ce que le dispositif capteur de force est associé à la seconde surface de rampe (16).

8. Dispositif selon l'une des revendications 5 à 7, caractérisé en ce que l'organe rotatif comprend deux disques parallèles (1a, 1b).

9. Dispositif selon l'une des revendications 5 à 8, caractérisé en ce que le moyen de piston (5) incorpore un système (28) de rattrapage de jeux fonctionnels.

## Claims

1. Electrical braking device for a vehicle, comprising an actuating mechanism for displacing at least one friction member (4a) in one direction and for bringing it into frictional engagement with at least one rotary member to be braked (1a), the actuating mechanism comprising an electric motor (8) which drives in reversible rotation a control shaft (10) having a threaded part (11) cooperating in driving engagement with an actuating member (12) displaceable linearly to actuate the friction member, characterized in that the control shaft (10) extends substantially at right angle to the said direction of displacement of the friction member, and in that the actuating member comprises a wedge structure (12) associated with at least one pair of rollers (14) cooperating respectively with a pair of opposing ramp surfaces (15, 16), at least a first (15) of these ramp surfaces being formed on a piston means (5) displaceable in the said direction to actuate the friction member (4a), and in that it comprises at least one axial ball thrust-bearing means (19) between the control shaft (10) and an adjacent stationary wall (20), to absorb the axial forces on the control shaft (10) and allow a slight angular deflection of the control shaft (10) to accompany the displacement of the piston means (5).

2. Device according to Claim 1, characterized in that it comprises an assistance spring (50) biasing the wedge structure (12) in the actuating direction of the piston means (5).

3. Device according to either of Claims 1 or 2, characterized in that the control shaft (10) is connected to the output shaft (9) of the electric motor (8) via an elastic coupling (18).

4. Device according to any of Claims 1 to 3, characterized in that it comprises at least one force sensor device (23) associated with at least one (16) of said ramp surfaces.

5. Device according to any of the preceding claims, characterized in that the rotary member comprises at least one disc (1a), the device including a caliper structure (2) straddling the disc and supporting the actuating mechanism, said piston means (5) sliding in a bore (6) formed in the caliper structure (2).

6. Device according to Claim 5, characterized in that the second ramp surface (16) is mounted stationary in the caliper structure (2).

7. Device according to Claim 4 and Claim 6, characterized in that the force sensor device is associated with the second ramp surface (16).

8. Device according to any of Claims 5 to 7, characterized in that the rotary member comprises two parallel discs (1a, 1b).

9. Device according to any of Claims 5 to 8, characterized in that the piston means (5) includes a system (28) for compensating functional plays.

## Patentansprüche

1. Vorrichtung zum elektrischen Bremsen für Fahrzeuge, mit einem Betätigungsmechanismus, um wenigstens ein Reibungselement (4a) in einer Richtung zu verschieben und um es in Reibungseingriff mit wenigstens einem Drehelement (1a) zum Bremsen zu bringen, wobei der Betätigungsmechanismus einen Elektromotor (8) umfaßt, der eine Antriebswelle (10) in umkehrbarer Drehung antreibt, welche einen Gewindeteil (11) umfaßt, der mit einem Betätigungselement (12) in Antriebseingriff zusammenwirkt, das linear verschiebbar ist, um das Reibungselement zu betätigen, dadurch gekennzeichnet, daß die Antriebswelle (10) sich zu dieser Richtung der Verschiebung des Reibungselements im wesentlichen orthogonal erstreckt und daß das Betätigungselement eine Keilstruktur (12) aufweist, die wenigstens einem Paar Rollen (14) zugeordnet ist, welches jeweils mit einem Paar sich gegenüberliegender Rampenoberflächen (15, 16) zusammenwirkt, wobei wenigstens eine erste (15) dieser Rampenoberflächen auf einem Kolbenmittel (5) angebracht ist, das in der genannten Richtung verschiebbar ist, um das Reibungselement (4a) zu betätigen, und daß sie wenigstens eine axiale Kugelanschlageinrichtung (19) zwischen der Antriebswelle (10) und einer benachbarten feststehenden Wand (20) umfaßt, um die axialen Beanspruchungen auf der Antriebswelle (10) aufzunehmen und eine leichte Winkelbewegung der Antriebswelle (10) zu ermöglichen, um die Verschiebung des Kolbenmittels (5) zu begleiten.

2. Vorrichtung nach Anspruch 1, dadurch gekennzeichnet, daß sie eine Hilfsfeder (50) umfaßt, die die Keilstruktur (12) in der Betätigungsrichtung des Kolbenmittels (5) beansprucht.

3. Vorrichtung nach Anspruch 1 oder 2, dadurch gekennzeichnet, daß die Antriebswelle (10) durch eine elastische Kupplung (18) mit der Ausgangswelle (9) des Elektromotors (8) verbunden ist.

4. Vorrichtung nach einem der Ansprüche 1 bis 3, dadurch gekennzeichnet, daß sie wenigstens eine Kraftfühlereinrichtung (23), die wenigstens einer (16) der Rampenoberflächen zugeordnet ist, umfaßt.

5. Vorrichtung nach einem der vorstehenden Ansprüche, dadurch gekennzeichnet, daß das Drehelement wenigstens eine Scheibe (1a) umfaßt, wobei die Vorrichtung eine Sattelstruktur (2), welche die Scheibe übergreift und den Betätigungsmechanismus trägt, umfaßt, und das Kolbenmittel (5) in einer in der Sattelstruktur (2) gebildeten Bohrung (6) gleitet.

6. Vorrichtung nach Anspruch 5, dadurch gekennzeichnet, daß die zweite Rampenoberfläche (16) in der Sattelstruktur (2) fest angebracht ist.

7. Vorrichtung nach Anspruch 4 und 6, dadurch gekennzeichnet, daß die Kraftfühlereinrichtung der zweiten Rampenoberfläche (16) zugeordnet ist.

8. Vorrichtung nach einem der Ansprüche 5 bis 7, dadurch gekennzeichnet, daß das Drehelement zwei zueinander parallele Scheiben (1a, 1b) umfaßt.

9. Vorrichtung nach einem der Ansprüche 5 bis 8, dadurch gekennzeichnet, daß das Kolbenmittel (5) ein System (28) zum Ausgleichen des Funktionspiels beinhaltet.

FIG_1

EP 0 223 704 B1

FIG.2